# EUROPEAN PATENT APPLICATION

(11) **EP 4 621 559 A1**
(43) Date of publication of application: **24.09.2025**
(21) Application number: 24461540.7
(22) Date of filing: 18.03.2024
(51) Int. Cl.: G06F 8/65

(54) **AEROSOL PROVISION SYSTEM**

(71) Applicant: Nicoventures Trading Limited, London WC2R 3LA (GB)
(72) Inventor: JANCZAK, Hubert, 02-670 Warszawa (PL); BAKER, Darryl, London, WC2R 2PG (GB); SZELAGOWSKI, Wojciech, 02-670 Warszawa (PL); KERSEY, Rob, Hove, BN3 7GS (GB); YOUNOSSI, Najeeb, London, WC2R 3LA (GB)
(74) Representative: Dehns

(57) **Abstract**

An authorised computing system 510 for updating functionality of a plurality of aerosol provision devices 515, the plurality of aerosol provision devices 515 having a first subset of aerosol provision devices 520 and a second subset of aerosol provision devices 530. The authorised computing system 510 is configured to: send a first software update file comprising first software to each aerosol provision device of the first subset of aerosol provision devices 520; receive data relating to the attempting to implement the first software of the software update file by the first subset of aerosol provision devices 520; and in dependence of the data relating to the attempting to implement the first software of the first software update file, send a second software update file including second software to the second subset of the aerosol provision devices 530.

## Description

### TECHNICAL FIELD

The present disclosure relates to a method of updating functionality of a plurality of aerosol provision devices; an authorised computing system for updating functionality of a plurality of aerosol provision devices; and a system comprising the authorised computing system and a plurality of aerosol provision devices.

### BACKGROUND

The operation of delivery systems, such as aerosol provision systems, may be controlled by a controller. A delivery system may comprise an outer housing, a memory, a controller configured to control operation of the delivery system, a control interface for receiving inputs to the delivery system and providing outputs from the delivery system, and a power source configured to supply electrical power for operation of the delivery system. The delivery system may also comprise an aerosol generator, configured to generate aerosol from aerosol generating material, which may be in the form of a liquid, solid, or gel. The operation of the delivery system may be controlled by the controller comprised in the delivery system, or by a controller of a further device which communication circuitry of the control interface of the delivery system is configured to connect to and communicate data with. For example, the further device may send data comprising instructions to perform a control action to the communication circuitry of the delivery system. The operation of the delivery system may be controlled by a distributed system, comprising the delivery system and one or more further devices, such as an external power source device, and/or a computing device, which together control the operation of the delivery system. The delivery systems may benefit from receiving software update files to improve their functionality and/or security.

### SUMMARY

In accordance with some embodiments described herein, there is provided a method of updating functionality of a plurality of aerosol provision devices, the plurality of aerosol provision devices comprising a first subset of aerosol provision devices and a second subset of aerosol provision devices, comprising:
sending, by an authorised computing system, a first software update file comprising first software to each aerosol provision device of the first subset of aerosol provision devices;
attempting to implement, by aerosol provision devices of the first subset of aerosol provision devices, the first software of the first software update file;
receiving, by the authorised computing system, data relating to the attempting to implement the first software of the first software update file; and
in dependence of the data relating to the attempting to implement the first software of the first software update file, sending, by the authorised computing system, a second software update file including second software to the second subset of the aerosol provision devices.

The data relating to the attempting to implement the first software may be sent to the authorised computing system, from the first subset of aerosol provision devices.

The data relating to the attempting to implement the first software may be sent to the authorised computing system, from the first subset of aerosol provision devices following the implementing of the first software file by aerosol provision devices of the first subset of aerosol provision devices.

The data relating to the attempting to implement of the first software may comprise data indicating whether or not the first software was implemented by aerosol provision devices of the first subset of aerosol provision devices as a result of the attempting to implement the first software.

The data relating to the attempting to implement of the first software may comprise data relating to one or more properties of the aerosol provision devices of the first subset of aerosol provision devices prior to the attempting to implement the first software.

The one or more properties may comprise one or more properties of previous software of the aerosol provision devices of the first subset of aerosol provision devices, wherein the previous software was implemented by the aerosol provision devices of the first subset prior to the attempting to implement the first software.

The one or more properties of the previous software may comprise one or more properties relating to a time of development of the previous software.

The one or more properties relating to a time of development of the previous software may comprise:
i) a property indicating a date of development of the previous software; and/or
ii) a property indicating an iteration of development of the previous software.

The data relating to the attempting to implement the first software may comprise use data relating to use of the aerosol provision devices of the first subset of aerosol provision devices.

The use data may comprise use data relating to use of the aerosol provision devices of the first subset of aerosol provision devices after the attempting to implement the first software.

The use data relating to use of the first subset of aerosol provision devices after the attempting to implement the first software may comprise use data relating to use of the aerosol provision devices of the first subset of aerosol provision devices for which the first software was implemented as a result of the attempting to implement the first software.

The use data may comprise one or more entries of one or more types of use data. Each entry of the one or more entries of one or more types of use data may include a timestamp.

The one or more entries of one or more types of use data may include one or more entries of a type of use data which indicate a property relating to a power source of the aerosol provision devices of the first subset of aerosol provision devices.

The property relating to a power source of first subset of aerosol provision devices may comprise:
i) a charge level of a power source of the aerosol provision devices of the first subset of aerosol provision devices; or
ii) a charging status of the power source of the aerosol provision devices of the first subset of aerosol provision devices.

The one or more entries of one or more types of use data may include one or more entries of a type of use data which indicate a property relating to a connected status of communication circuitry of the aerosol provision devices of the first subset of aerosol provision devices.

The one or more entries of one or more types of use data may include one or more entries of a type of use data which indicate a property relating to use with aerosol generating material of the aerosol provision devices of the first subset of aerosol provision devices.

The property relating to use with aerosol generating material of the aerosol provision devices of the first subset of aerosol provision devices may comprise:
i) a type of aerosol generate material provided to the aerosol provision device;
ii) a type of consumable comprising aerosol generating material provided to the aerosol provision device;
iii) a heating profile according to which the controller causes a heating assembly of an aerosol generator to heat aerosol generating material;
iv) an occurrence of a session of generating aerosol from aerosol generating material by the aerosol provision device; or
v) an occurrence of an inhalation of aerosol generated from aerosol generating material by the aerosol provision device.

If the data relating to the attempting to implement the first software of the first software update file indicates that the first software was implemented as a result of the attempting to implement the first software on above a threshold portion of the aerosol provision devices of the first subset of aerosol provision devices, the second software may correspond to the first software.

If the data relating to the attempting to implement the first software of the first software update file indicates that the first software was not implemented as a result of the attempting to implement the first software on above a threshold portion of the aerosol provision devices of the first subset of aerosol provision devices, the method may comprise:
sending, by an authorised computing system, a modified first software update file comprising modified first software to each aerosol provision device of the first subset of aerosol provision devices;
attempting to implement, by aerosol provision devices of the first subset of aerosol provision devices, the modified first software of the first software update file;
receiving, by the authorised computing system, data relating to the attempting to implement the modified first software of the software update file.

The method may comprise selecting, by the authorised computing system, the aerosol provision devices of the first subset of aerosol provision devices from the plurality of aerosol provision devices.

The first subset of aerosol provision devices may be aerosol provision devices of a first type, and the second subset of aerosol provision devices may be aerosol provision devices of a second type.

The aerosol provision devices of the first type may be for generating aerosol from a first type of aerosol generating material, and the aerosol provision devices of the second type may be for generating aerosol from a second type of aerosol generating material.

The aerosol provision devices of the first type may be configured to use a first mechanism to generate aerosol, and the aerosol provision devices of the second type may be configured to use a second mechanism to generate aerosol.

The first subset of aerosol provision devices may be aerosol provision devices associated with a first region, and the second subset of aerosol provision devices may be aerosol provision devices are associated with a second region. The first region and second region at least may partially overlap.

The aerosol provision devices of the first subset of aerosol provision devices may be associated with users having a first property, and the aerosol provision devices of the second subset of aerosol provision devices are associated with users having a second property.

The aerosol provision devices of first subset of aerosol provision devices may be selected at random from the plurality of aerosol provision devices.

The first subset of aerosol provision devices may account for <70%, <50%, <30%, <20%, <10% of the plurality of aerosol provision devices.

In accordance with some embodiments described herein, there is provided an authorised computing system for updating functionality of a plurality of aerosol provision devices, the plurality of aerosol provision devices comprising a first subset of aerosol provision devices and a second subset of aerosol provision devices, wherein the authorised computing system is configured to:
send a first software update file comprising first software to each aerosol provision device of the first subset of aerosol provision devices;
receive data relating to the attempting to implement the first software of the software update file by the first subset of aerosol provision devices; and
in dependence of the data relating to the attempting to implement the first software of the first software update file, send a second software update file including second software to the second subset of the aerosol provision devices.

In accordance with some embodiments described herein, there is provided a system, comprising:
the authorised computing system described above; and
a plurality of aerosol provision devices, the plurality of aerosol provision devices comprising a first subset of aerosol provision devices and a second subset of aerosol provision devices.

Any aspect may comprise any feature or functional step described with respect to another aspect.

### FIGURES

Aspects of the invention will now be described, by way of example only, with reference to accompanying drawings, in which:
Figure 1 shows a cross-sectional view through a schematic representation of an aerosol provision system in accordance with certain embodiments.
Figure 2 shows a cross-sectional view through a schematic representation of an aerosol provision system in accordance with certain embodiments.
Figure 3 shows a cross-sectional view through a schematic representation of an aerosol provision system in accordance with certain embodiments.
Figure 4 shows a schematic representation of system comprising an aerosol provision device, a consumable, an external power source device, local computing devices, and a remote computing device, in accordance with certain embodiments.
Figure 5 shows a schematic representation of a system comprising an authorised computing system in accordance with certain embodiments.
Figure 6 shows a method of updating functionality of a plurality of aerosol provision devices in accordance with certain embodiments.

### DETAILED DESCRIPTION

Aspects and features of certain examples and embodiments are discussed or described herein. Some aspects and features of certain examples and embodiments may be implemented conventionally and these are not discussed/described in detail in the interests of brevity. It will thus be appreciated that aspects and features of apparatus and methods discussed herein which are not described in detail may be implemented in accordance with any conventional techniques for implementing such aspects and features.

The present application is generally directed to the field of "delivery systems", i.e. systems that deliver at least one substance to a user. Generally, the aim of delivering that substance to a user will be to satisfy a particular "consumer moment". To this end, the substance may comprise constituents which impart a physiological effect on the user, a sensorial effect on the user, or both. In this context, the substance will generally be present in an aerosol-generating material or another material that is not intended to be aerosolised. The material itself (whether for aerosolisation or not) will typically contain a range of constituents. These are generally broken down as active substances, flavours, aerosol-former materials and other functional materials like fillers. An active substance, when delivered to a user, may result in some form of psychological effect on the user.

The delivery systems take many forms. According to the present disclosure, a "combustible" aerosol provision system is one where a constituent aerosol-generating material of the aerosol provision system (or component thereof) is combusted or burned during use in order to facilitate delivery of at least one substance to a user.

Exemplary combustible aerosol provision systems include cigarettes, cigarillos, cigars, and tobacco for pipes or for roll-your-own or for make-your-own cigarettes (whether based on tobacco, tobacco derivatives, expanded tobacco, reconstituted tobacco, tobacco substitutes or other smokable material). Exemplary non-combustible aerosol provision systems include heat-not-burn aerosol provision systems (such as Tobacco Heating Products (THPs) and Carbon-tipped Tobacco Heating Products (CTHPs)) in which a solid material is heated to generate aerosol without combusting the material, vapour aerosol provision systems (commonly known as "electronic cigarettes" or "e-cigarettes") in which liquid material is heated to generate aerosol, and hybrid aerosol provision systems that are similar to vapour aerosol provision systems except that the aerosol generated from the liquid material passes through a second material (such as tobacco) to pick up additional constituents before reaching the user. Exemplary aerosol-free delivery systems that deliver the at least one substance to a user orally, nasally, transdermally or in another way without forming an aerosol, including but not limited to, lozenges, gums, patches, articles comprising inhalable powders, and oral products such as oral tobacco which includes snus or moist snuff, wherein the at least one substance may or may not comprise nicotine.

While various techniques will be described herein with regard to non-combustible aerosol provision systems, these may readily be applied in the context of any of the aforementioned delivery systems, for example by implementation within a delivery system where feasible, or in a "smart" container for delivery systems, e.g. for storing delivery systems. The delivery system described herein can be implemented as a combustible aerosol provision system, a non-combustible aerosol provision system or an aerosol-free delivery system.

In particular, but not exclusively, the present disclosure relates to a non-combustible aerosol provision system. A "non-combustible" aerosol provision system is an aerosol provision system where a constituent aerosol generating material of the aerosol provision system (or component thereof) is not combusted or burned in order to facilitate delivery of at least one substance to a user. The delivery system may be a non-combustible aerosol provision system, such as a powered non-combustible aerosol provision system. The non-combustible aerosol provision system may be an electronic cigarette, also known as a vaping device or electronic nicotine delivery system (END), although it is noted that the presence of nicotine in the aerosol-generating material is not a requirement. The non-combustible aerosol provision system may be an aerosol generating material heating system, such as a heat-not-burn system. An example of such a system is a tobacco heating system. In particular, but not exclusively, the present disclosure relates to an electronic aerosol provision system, which may (or may not) be an electronic non-combustible aerosol provision system.

Aerosol-generating material is a material that is capable of generating aerosol, for example when heated, irradiated or energized in any other way. Aerosol-generating material may, for example, be in the form of a solid, liquid or semi-solid (such as a gel) which may or may not contain an active substance and/or flavourants. The aerosol-generating material may comprise one or more active substances and/or flavours, one or more aerosol-former materials, and optionally one or more other functional material. The aerosol-generating material may comprise a binder, such as a gelling agent, and an aerosol former. Optionally, a substance to be delivered and/or filler may also be present. Optionally, a solvent, such as water, is also present and one or more other components of the aerosol-generating material may or may not be soluble in the solvent. In some embodiments, the aerosol-generating material is substantially free from botanical material. In particular, in some embodiments, the aerosol-generating material is substantially tobacco free.

The aerosol-generating material may comprise or be in the form of an aerosol-generating film. The aerosol-generating film may comprise a binder, such as a gelling agent, and an aerosol former. Optionally, a substance to be delivered and/or filler may also be present. The aerosol-generating film may be substantially free from botanical material. In particular, in some embodiments, the aerosol-generating material is substantially tobacco free. The aerosol-generating film may have a thickness of about 0.015 mm to about 1 mm. For example, the thickness may be in the range of about 0.05 mm, 0.1 mm or 0.15 mm to about 0.5 mm or 0.3 mm. The aerosol-generating film may be continuous. For example, the film may comprise or be a continuous sheet of material. The sheet may be in the form of a wrapper, it may be gathered to form a gathered sheet or it may be shredded to form a shredded sheet. The shredded sheet may comprise one or more strands or strips of aerosol-generating material. The aerosol-generating film may be discontinuous. For example, the aerosol-generating film may comprise one or more discrete portions or regions of aerosol-generating material, such as dots, stripes or lines, which may be supported on a support. In such embodiments, the support may be planar or non-planar. The aerosol-generating film may be formed by combining a binder, such as a gelling agent, with a solvent, such as water, an aerosol-former and one or more other components, such as one or more substances to be delivered, to form a slurry and then heating the slurry to volatilise at least some of the solvent to form the aerosol-generating film. The slurry may be heated to remove at least about 60 wt%, 70 wt%, 80 wt%, 85 wt% or 90 wt% of the solvent.

The aerosol-generating material may comprise or be an "amorphous solid". In some embodiments, the aerosol-generating materiel comprises an aerosol-generating film that is an amorphous solid. The amorphous solid may be a "monolithic solid". The amorphous solid may be substantially non-fibrous. In some embodiments, the amorphous solid may be a dried gel. The amorphous solid is a solid material that may retain some fluid, such as liquid, within it. In some embodiments, the amorphous solid may, for example, comprise from about 50wt%, 60wt% or 70wt% of amorphous solid, to about 90wt%, 95wt% or 100wt% of amorphous solid. The amorphous solid may be substantially free from botanical material. The amorphous solid may be substantially tobacco free.

The aerosol-former material may comprise one or more constituents capable of forming an aerosol. In some embodiments, the aerosol-former material may comprise one or more of glycerol, propylene glycol, diethylene glycol, triethylene glycol, tetraethylene glycol, 1 ,3-butylene glycol, erythritol, meso-Erythritol, ethyl vanillate, ethyl laurate, a diethyl suberate, triethyl citrate, triacetin, a diacetin mixture, benzyl benzoate, benzyl phenyl acetate, tributyrin, lauryl acetate, lauric acid, myristic acid, and propylene carbonate. The one or more other functional materials may comprise one or more of pH regulators, colouring agents, preservatives, binders, fillers, stabilizers, and/or antioxidants.

As is common in the technical field, the terms "vapour" and "aerosol", and related terms such as "vaporise", "volatilise" and "aerosolise", may generally be used interchangeably. In use, an inhalation on the aerosol provision system occurs when a user inhales aerosol generated from the aerosol generating material. A sequence of inhalations can be considered a "session". A sequence may correspond to a characteristic pattern of inhalations. A sequence may correspond to a predetermined number, or range, or inhalations on the aerosol provision system by the user. For example, a session may be defined as 10 inhalations, or between 8 to 12 inhalations. Additionally or alternatively, a session may be defined by a predetermined time from an initial inhalation on the aerosol provision system (for example, with aerosol generating material being heated to a target temperature for the predetermined time). For example the predetermined time may be under 4 four minutes, under 6 minutes, or under 10 minutes. Hence, a session can be defined when the total number inhalations reaches a predetermined number, or range, of inhalations and/or when the time elapsed from the initial inhalation reaches the predetermined time. It should be appreciated that the values for the predetermined number of inhalations and predetermined time have been given purely as an example, and other numbers and times may be used in other implementations as appropriate.

Additionally or alternatively, in an embodiment a session corresponds to a sequence of inhalations, the sequence separated from another session by a pause of more than a threshold duration. The threshold duration may be selected for ease of comprehension by the user (e.g. 5, 10, 15, 20, 25, 30, 35, 40, 45, 50 or 55 minutes, or more preferably a period in the range 5-45 minutes, or more preferably a period in the range 10-30 minutes, or still more preferably a period in the range 15-20 minutes), or it may be selected on a pharmokinetic basis, such as the so-called half-life of nicotine in the body (approximately 2 hours) or a physiological basis, such as a perceived drop in brain stimulation by the nicotine (for example in the order of 15-25 minutes, averaging around 18-20 minutes). Optionally this half-life may in turn be individualised, e.g. on the basis of sex, build (size, weight etc), ethnicity and the like. A look-up table of half-life values, and/or a scaling value for one or more physiological factors of the user may be used to refine an otherwise generic half-life value. Hence an inhalation session may comprise a characteristic pattern and/or may be separated from another session by a threshold duration of non-use.

Typically, the aerosol provision system may comprise an aerosol provision device (e.g. a reusable part) and a consumable for use with the aerosol provision device (e.g. a disposable part). In many cases, the consumable is sold separately from the device, and often in a multipack. The terms "consumable" and "article" may generally be used interchangeably. Often the consumable will comprise the aerosol generating material, and the aerosol provision device will comprise a power source, controller, control interface, and memory (each of which will be discussed in more detail herein) enclosed at least partly within an outer housing which may be formed from any suitable material, for example a plastics material or a metal. In use, the consumable may be engaged with the aerosol provision device. For example, at least part of the consumable may be received by the aerosol provision device, for example in a consumable chamber of the aerosol provision device which is configured to receive at least part of the consumable. The aerosol provision device is configured to generate aerosol from the aerosol generating material of the consumable. Once the aerosol generating material of consumable has been exhausted, the user can remove the consumable, e.g. by disengaging the aerosol provision device and the consumable, dispose of it, and replace it with a (new) consumable. Devices conforming to this type of two-piece modular configuration may generally be referred to as two-piece aerosol provision devices, which together with a consumable may generally be referred to as two-piece aerosol provision systems.

In such two-piece aerosol provision systems, the consumable and aerosol provision device are able to engage with one another. For example, the consumable may be mechanically and/or electrically coupled to the aerosol provision device, using an engagement interface of the aerosol provision device and a corresponding engagement interface of the consumable. The engagement interface of the aerosol provision device may comprise mechanical engagement means for mechanical coupling with the consumable, e.g. with corresponding mechanical engagement means of the consumable. The engagement interface may comprise an electrical engagement interface for electrically connecting with the consumable, e.g. with a corresponding electrical engagement interface of the consumable. The electrical engagement interface of the aerosol provision device may be configured to supply electrical power to the consumable, for example to an aerosol generator of the consumable (as will be discussed in more detail herein).

While a consumable commonly comprises a single portion of aerosol generating material, in some cases the consumable may comprise a plurality of portions of aerosol generating material, each of which may be different. In such cases, the consumable may be received by an aerosol provision device which is configured to generate aerosol from one or more of the plurality of portions of aerosol generating material. For example, the aerosol provision device may be configured to generate aerosol independently from each of the portions of aerosol generating material. Each portion of aerosol generating material may be a discrete portion, wherein the plurality of discrete potions are separate from one another such that each of the discrete portions may be energised (e.g. heated) individually, and/or may be energised (e.g. heated) independently, to generate an aerosol.

In some cases, the aerosol provision device may be configured to receive a plurality of consumables, which may each comprise different aerosol generating material respectively. In use, the plurality of consumables is received by the aerosol provision device, and the aerosol provision device is configured to generate aerosol from the aerosol generating material of one or more of the consumables, each of which aerosol may be generated from independently. Devices conforming to this type of configuration may generally be referred to as multi-consumable devices, which together with the plurality of consumables may generally be referred to as multi-consumable systems. Multi-consumable devices and systems such as these may use any of the features used in a two-piece aerosol provision devices and systems, such as, but not limited to the aerosol generating material, aerosol generator, power source, control interface, controller, and memory (as will be discussed in more detail herein). Likewise, these components may be enclosed at least partly within an outer housing which may be formed from any suitable material, for example a plastics material or a metal.

Embodiments are also envisaged in which the aerosol provision device is a one-piece aerosol provision device, which is not configured to receive a removable consumable, and instead the aerosol provision device itself comprises the aerosol generating material. The one-piece aerosol provision device may be configured to be refillable, such that when at least a portion of the (initial) aerosol generating material of the aerosol provision device is exhausted, it can be refilled with (new) aerosol generating material. Alternatively, the one-piece aerosol provision device may be a disposable one-piece aerosol provision device, which the user can dispose of once the aerosol generating material has been exhausted (for example, after a predetermined number of inhalations), and for example is not configured to be refillable by the user. Further, the one-piece aerosol provision device may be a non-rechargeable one-piece aerosol provision device, not comprising a charging interface (as will be discussed in more detail herein) for receiving power from an external power source. A one-piece aerosol provision device such as these (either refillable or disposable) may use any of the features used in two-piece (and/or multi-consumable) aerosol provision systems, such as, but not limited to, the aerosol generating material, aerosol generator, power source, control interface, controller, and memory (as will be discussed in more detail herein). Likewise, these components may be enclosed at least partly within an outer housing which may be formed from any suitable material, for example a plastics material or a metal.

It will be understood that references to "an aerosol provision device" or "the aerosol provision device" relate to one or more of the aerosol provision devices comprised in the plurality of aerosol provision devices mentioned in the above summary.

The aerosol provision system comprises a mouthpiece, through which the user can draw aerosol that has been generated from the aerosol generating material. The mouthpiece may comprise a material that feels comfortable to the lips of the user, for example a plastic or rubber material. As a user inhales on the mouthpiece, air is drawn through the aerosol provision system, which combines with the aerosol generated from the aerosol generating material. The user can then inhale this combination of air and aerosol, such that substance of the aerosol can be delivered to the user. An aerosol provision system may comprise one or more air inlets, which can be located away from a mouthpiece of the system. When a user sucks on the mouthpiece, air is drawn in through the one or more air inlets, and past the location where the aerosol is generated. There may be a flow path connecting between this location and an opening in the mouthpiece, so that the air drawn in through the one or more air inlets continues along the flow path to the opening, carrying the aerosol with it. The aerosol then exits the aerosol provision system through the mouthpiece, e.g. the opening thereof, for inhalation by the user. The mouthpiece may be a part of the consumable, or a part of the aerosol provision device, or may be a separate component which forms a part of the aerosol provision system in addition to the aerosol provision device and the consumable.

The aerosol provision system (e.g. the aerosol provision device thereof) may be elongate, extending along a longitudinal axis. The aerosol provision system (e.g. the aerosol provision device thereof) has a proximal end, which will be closest to the user (e.g. the user's mouth) when in use by the user to inhale aerosol generated by the aerosol provision system, and a distal end which will be furthest from the user when in use, i.e. at an end opposing the proximal end.

The proximal end may also be referred to as the "mouth end". The aerosol provision system (e.g. the aerosol provision device thereof) accordingly defines a proximal direction, which is directed towards the user when in use, e.g. along the longitudinal axis from the distal end to the proximal end. Further, the aerosol provision system likewise defines a distal direction, which is directed away from the user when in use, e.g. along the longitudinal axis from the proximal end to the distal end. The terms 'proximal' and 'distal' as applied to features of the aerosol provision system (e.g. aerosol provision device) will be described by reference to the relative positioning of such features with respect to each other in a proximal or distal direction along the longitudinal axis.

The construction of the aerosol provision system (and aerosol provision device thereof) may change depending upon the form of the aerosol generating material which it is configured to generate aerosol from. However, while examples will be discussed below with regard to various different forms of aerosol generating material, and correspondingly different aerosol provision device constructions, the techniques discussed herein may be applied in all forms of the aerosol generating material.

The aerosol provision system (e.g. the aerosol provision device thereof) comprises an aerosol generator configured to generate aerosol from the aerosol generating material, the aerosol being generated at an aerosol generation area of the aerosol provision system. The aerosol generator often, but not always, comprises a heating assembly configured to heat the aerosol generating material and cause it to volatise, thereby generating aerosol which can be inhaled by the user. While many features will be discussed herein with regard to an aerosol generator which comprises a heating assembly, we note that these features may likewise be applied to an aerosol generator which does not necessarily comprise a heating assembly.

The aerosol provision system (e.g. the aerosol provision device thereof) often comprises a heating chamber, which the heating assembly is configured to heat, such that aerosol generating material in the heating chamber is heated. In such arrangements, the heating chamber may correspond to the aerosol generation area. The heating chamber is configured to receive aerosol generating material. The heating chamber may be comprised in the consumable. The aerosol provision system (e.g. the aerosol provision device thereof) may comprise a consumable chamber configured to receive at least part of the consumable. The heating chamber may correspond to the consumable chamber, however, such as in arrangements where the heating chamber is comprised in the consumable, the heating chamber may not necessarily correspond to the consumable chamber, but rather a region within the consumable which, when connected to the aerosol provision device in use, is received in the consumable chamber. The consumable may be configured to be partially or fully inserted into the aerosol provision device by inserting it into the consumable chamber through an opening in the outer housing of the aerosol provision device.

The heating assembly may comprise a heating element, and the heating assembly is configured to heat the heating element. The heating element is for heating the aerosol generating material, e.g. by being configured to heat the heating chamber. The heating element may be a part of the aerosol provision device, or a part of the consumable, or may be a separate component which is a part of the aerosol provision system in addition to the aerosol provision device and the consumable. A plurality of corresponding heating elements may be used, which the heating assembly may be configured to heat independently, e.g. such that they can heat individually or in combination. In the case of a system comprising a plurality of portions of aerosol generating material (regardless of the plurality of portions being in the same consumable, a plurality of consumables, or in the aerosol provision device), a plurality of corresponding heating elements may be used, each being configured to heat a corresponding portion of aerosol generating material. A plurality of heating elements may also be configured to heat different regions of the same portion of aerosol generating material.

In some arrangements the heating assembly is configured to cause the heating element to become heated by resistive heating, wherein a current is passed through the heating element in order to cause heating to occur as a result of the electrical resistance of the heating element. In some arrangements the heating assembly is configured to cause a heating element to become heated by inductive heating, in which case a magnetic field generator of the heating assembly is configured to generate a varying magnetic field that penetrates the heating element, and causes susceptor material within the heating element to become heated. In other words, the susceptor material is configured to be heated by penetration with a varying magnetic field. The magnetic field generator may comprise a coil, such as a helical coil, which may encircle at least part of the heating chamber.

The heating element may become heated by penetration with a varying magnetic field because the susceptor material comprises electrically conductive material, and the varying magnetic field causes the induction of eddy currents within the susceptor material that cause heating to occur. This may, in alternative or in addition, be because the susceptor material comprises magnetic material, and the varying magnetic field causes the heating of the susceptor material by the mechanism of magnetic hysteresis. In embodiments, the susceptor material may comprise material which is both electrically conductive and magnetic.

The heating element, e.g. the susceptor material thereof (when present), may comprise one or more materials selected from the group comprising a metallic material such as aluminium, gold, iron, nickel, cobalt, plain-carbon steel, stainless steel, ferritic stainless steel, copper, and bronze, or a non-metallic material such as conductive carbon or graphite.

Arrangements are contemplated in which the heating assembly comprises a radiation heating component configured to generate radiation for heating the aerosol generating material, e.g. for heating the heating chamber. The radiation may comprise electromagnetic radiation, such as infrared radiation or microwave radiation, or sonic radiation, such as ultrasonic radiation. In such arrangements, as with arrangements discussed above with regard to a heating element, the heating assembly may be configured to heat independently different portions of aerosol generating material, or different regions of the same portion of aerosol generating material. Generally, this may be enabled by the heating assembly being configured to heat independently different regions of the heating chamber.

Each of these heating techniques may be applied to any of the aerosol generating materials discussed above, and in the context of one-piece aerosol provision systems, two-piece aerosol provision systems, and multi-consumable aerosol provision systems, or any other form of delivery system which uses heating to generate aerosol from aerosol generating material.

In arrangements where the aerosol generating material is a liquid, the aerosol generating can be stored within a reservoir comprised in the aerosol provision system. The reservoir may a part of the aerosol provision device, particularly in the case that the aerosol provision device is a one-piece aerosol provision device, or may a part of the consumable (when present). In arrangements where the reservoir storing the aerosol generating material is a part of the consumable, the consumable may also comprise the heating element, which may be heated using resistive or inductive heating. In such arrangements where the consumable comprises a reservoir storing aerosol generating material, the consumable may be referred to as a cartridge.

The reservoir may have the form of a storage tank, being a container or receptacle in which aerosol generating material can be stored such that the liquid is free to move and flow within the confines of the tank. In arrangements in which the reservoir is comprised in the consumable, the reservoir may be sealed after filling during manufacture so as to be disposable after the aerosol generating material is consumed, otherwise, it may have an inlet port through which new aerosol generating material can be added by the user. In such arrangements the heating element may be comprised in the consumable, and the heating element may be located externally of the reservoir tank for generating the aerosol by vaporisation of the aerosol generating material by heating. A transfer arrangement which may comprise a wick or other porous element may be provided to deliver aerosol generating material from the reservoir to the heating element. The transfer arrangement may have one or more parts located inside the reservoir, or otherwise be in fluid communication with the aerosol generating material in the reservoir, so as to be able to absorb aerosol generating material and transfer it, e.g. by wicking or capillary action, to other parts of the transfer arrangement that are adjacent or in contact with the heating element. This aerosol generating material is thereby heated and vaporised, to be replaced by new aerosol generating material from the reservoir for transfer to the heating element by the wick transfer arrangement. The transfer arrangement may be thought of as a conduit between the reservoir and the heating element that transfers aerosol generating material from the reservoir to the heating element. Although discussed in the context of a reservoir and heating element comprised in the consumable, these features may likewise be applied in an aerosol provision device, for example in the case the aerosol provision device is a one-piece aerosol provision device.

In arrangements where the aerosol generating material is a solid or a gel, the aerosol generating material can be provided in the consumable. The consumable may be in a rod format, which may also interchangeably be referred to as a "stick" format, and which may have a cylindrical shape. In some cases, the consumable further comprises a filter and/or a cooling element. In such cases, the consumable may comprise the mouthpiece. The consumable may comprise a wrapper, which at least partially surrounds other components of the consumable, including one or more of a filter, a cooling element, a mouthpiece and the aerosol generating material. In some cases, the wrapper may comprise a paper layer. In some cases, the wrapper may comprise a non-combustible layer (e.g. a layer which is resistant to combustion), such as a metallic foil. Suitably, the wrapper may comprise an aluminium foil layer. The wrapper may comprise a laminate structure, and in some cases, the laminate structure may comprise a least one paper layer and at least one non-combustible layer.

The consumable may be provided in a differently shaped format such as a planar format, in which case the consumable comprises a sheet. The aerosol generating material can be present on or in a support, to form a substrate. The support may, for example, be or comprise paper, card, paperboard, cardboard, reconstituted material, a plastics material, a ceramic material, a composite material, glass, a metal, or a metal alloy.

When present, the heating element may be a part of the aerosol provision device, such that it comes into proximity (e.g. in contact) with the consumable when the consumable is received by the aerosol provision device. Alternatively, the heating element may be a part of the consumable. This may be the case in arrangements where the aerosol generating material is liquid, solid, or gel.

The non-combustible aerosol provision system (e.g. the aerosol provision device or consumable thereof) may comprise an aerosol-modifying agent. An aerosol-modifying agent is a substance, typically located downstream of the aerosol generation area, that is configured to modify the aerosol generated, for example by changing the taste, flavour, acidity or another characteristic of the aerosol. The aerosol-modifying agent may be provided in an aerosol-modifying agent release component, that is operable to selectively release the aerosol-modifying agent. The aerosol-modifying agent may, for example, be an additive or a sorbent. The aerosol-modifying agent may, for example, comprise one or more of a flavourant, a colourant, water, and a carbon adsorbent. The aerosol-modifying agent may, for example, be a solid, a liquid, or a gel. The aerosol-modifying agent may be in powder, thread or granule form. The aerosol-modifying agent may be free from filtration material.

In some embodiments, the non-combustible aerosol provision system, such as a non-combustible aerosol provision device thereof, may comprise a power source. The power source may, for example, comprise an electric power source or an exothermic power source. In some embodiments, the exothermic power source comprises a carbon substrate which may be energised so as to distribute power in the form of heat to an aerosol-generating material or to a heat transfer material in proximity to the exothermic power source. In some embodiments, the power source comprises a battery, such as a rechargeable battery. Examples of suitable batteries include, for example, a lithium battery (such as a lithium-ion battery), a nickel battery (such as a nickel-cadmium battery), and an alkaline battery. The power source is connected to the heating assembly and configured to supply power to the heating assembly, such that the power source is configured to supply power to the heating assembly, and the heating assembly is configured to use power supplied by the power source to heat aerosol generating material.

In some embodiments, the aerosol provision system (e.g. the aerosol provision device thereof) comprises a controller configured to control operation of the aerosol provision system. It will be appreciated the functionality of the controller can be provided in various different ways, for example using one or more suitably programmed programmable computer(s) and / or one or more suitably configured application-specific integrated circuit(s) / circuitry / chip(s) / chipset(s) configured to provide the desired functionality. It will be appreciated the controller may comprise a microcontroller (MCU), an application specific integrated circuit (ASIC), a central processing unit (CPU), and/or a micro-processor. The controller may be considered to be processing circuitry. The operations of the controller are generally controlled at least in part by software programs executed on the controller. Generally, the aerosol provision device of the aerosol provision system comprises the controller, but this need not always be the case, and in arrangements the consumable may comprise the controller.

The controller may be configured to control operation of the aerosol generator, e.g. the heating assembly thereof. While many arrangements will be discussed with regard to the controller being configured to control operation of the heating assembly of the aerosol generator, these may be more generally applied to an aerosol generator which may or may not comprise a heating assembly. The controller is connected to the power source and the aerosol generator, and is configured to control the supply of power from the power source to the aerosol generator. As such, the controller may be configured to control the heating of aerosol generating material by the heating assembly.

The controller may be configured to heat aerosol generating material in accordance with a heating profile, e.g. by causing the heating assembly to heat the aerosol generating material in accordance with the heating profile. A heating profile refers to the variation of temperature of a material over time. For example, the varying temperature of a heating element measured at the heating element for the duration of a session of use may be referred to as the heating profile of that heating element (or equally as the heating profile of the heating assembly unit comprising that heating element). The heating element provides heat to the aerosol generating material during use, to generate an aerosol. The heating profile of the heating element therefore induces the heating profile of aerosol-generating material, e.g. which is disposed near the heating element.

The aerosol provision system (e.g. the aerosol provision device thereof) may also comprise a memory. The memory may comprise volatile memory, such as random access memory (RAM) or flash memory, and/or non-volatile memory, such as read only memory (ROM), electrically erasable read only memory (EEROM), or electrically erasable programmable read only memory (EEPROM). In embodiments, this memory comprises controller memory which is a part of the controller, and which may be integrated in the controller. The memory may additionally or alternatively comprise external memory, connected to the controller, and external to the controller. The external memory may be removable from the aerosol provision system (e.g. the aerosol provision device thereof), and may comprise an SD card or a microSD card. Software programs for execution by the controller may be stored on the memory.

The aerosol provision system (e.g. the aerosol provision device thereof) may also comprise a control interface for receiving inputs and/or providing outputs. For instance, the control interface may be configured to receive inputs, and provide input data to the controller corresponding to the received inputs. The control interface may be configured to receive output data from the controller, and provide outputs corresponding to the output data received from the controller.

The control interface may comprise a user interface comprising one or more input components for receiving inputs from a user, and one or more output components for providing outputs to a user. The one or more input components are configured to receive inputs from a user, and provide corresponding input data to the controller. The one or more input components may be configured to receive the inputs from a user in the form of physical manipulation by the user. The one or more input components may comprise a button (such as a rolling button), a switch, a dial, a microphone, a camera, an accelerometer, a touchscreen, or any plurality or combination thereof. The one or more input components may be assigned to functions such as switching the aerosol provision device on and off, and selecting an operating mode of the aerosol provision system (as will be discussed in more detail herein). The one or more output components are configured to receive output data from the controller, and provide corresponding outputs to a user. The one or more output components may comprise a light, such as an LED, a speaker, a haptic component, a display, such as a screen, or any plurality or combination thereof. The controller may be configured to cause the one or more output components to provide an output indicative of a property of the aerosol provision system, for example a property of the aerosol generating material, or the remaining power of the power source, and so forth.

The control interface may comprise one or more sensors for detecting one or more properties relating to the aerosol provision system (e.g. the aerosol provision device thereof), which may be configured to provide input data to the controller comprising sensor data relating to the detected one or more properties. The one or more sensors may comprise a puff sensor configured to detect a user inhalation on the aerosol provision system. The one or more sensor may comprise a temperature sensor configured to detect a temperature relating to the aerosol provision system, e.g. the temperature of the heating assembly, the heating element, the consumable, the aerosol generating material, the environment surrounding the aerosol provision system. The one or more sensors may comprise a consumable detection sensor configured to detect when a consumable has been engaged with the aerosol provision device, e.g. at least partly received by the aerosol provision device. The one or more sensors may comprise a consumable identification sensor configured to detect a property of a consumable, e.g. a property of the aerosol generating material of a consumable. The one or more sensors may comprise a biometric sensor configured to detect a biometric property relating to the user, e.g. a fingerprint, a heart rate, a breathing property.

The control interface may comprise communication circuitry configured to connect to one or more further devices, and/or communicate data with one or more further devices. The communication circuitry communicating data with one or more further devices may comprise sending data to one or more further devices (e.g. to transfer data from the aerosol provision device to the one or more further devices), receiving data from one or more further devices (e.g. to transfer data from the one or more further devices to the aerosol provision device), or both sending data to and receiving data from one or more further devices. The term "send" with regard to data can be understood to be the emission of data from a device, while the term "transfer" can be understood to be the emission of data from a device and receipt of the data by another device. For example, the communication circuitry may be configured to establish a data connection with one or more further devices, e.g. and communicate data with one or more further devices using the data connection. The data connection may be impermanent or otherwise transient, in the sense that the data connection may be established for a period of time necessary to carry out specific functionalities, but may also be disconnected when not required. In this context, a further device to the aerosol provision device may be another aerosol provision device, a consumable, or (as described further herein) an external power source device, or a computing device. In some embodiments, the communication circuitry is integrated into the controller, and in other embodiments it is implemented separately (comprising, for example, separate application-specific integrated circuit(s), circuitry, chip(s), and/or chipset(s)).

The communication circuitry may be configured to receive inputs, comprising data, from a further device, and provide (e.g. send) outputs, comprising data, to a further device. The communication circuitry may be configured to provide input data to the controller corresponding to inputs, comprising data, received from a further device, and configured to provide (e.g. send) outputs, comprising data, to a further device corresponding to output data provided by the controller. As such, the controller may receive (via the communication circuitry) data sent to the aerosol provision system (e.g. the aerosol provision device thereof) by a further device, and the controller may send (via the communication circuitry) data from the aerosol provision system (e.g. the aerosol provision device thereof) to a further device. The data received from the further device may comprise instructions for the controller of the aerosol provision system (e.g. the aerosol provision device thereof) to perform one or more control actions. The data provided to (e.g. sent to) the further device may comprise instructions for the further device to perform one or more control actions. Reference to a device sending data to a further device may be understood to correspond to the controller of the device causing communication circuitry of the device to send data to be received by control circuitry of the further device, corresponding input data to which is then received by the controller of the further device from the control circuitry of the further device.

The communication circuitry may comprise a wireless communication module configured to establish a wireless data connection with one or more further devices, and/or communicate data with one or more further devices using a wireless data connection. For example, the wireless communication module may comprise a Bluetooth module (e.g. a Bluetooth Low Energy module), a ZigBee module, a WiFi module (e.g. a Wifi Direct module), a 2G module, a 3G module, a 4G module, a 5G module, an LTE module, an NFC module, an RFID module, an optical communication module configured to communicate data using optical signals, an audio communication module configured to communicate data using audio signals, or other wireless communication module. As a result, the wireless data connection may correspondingly be a Bluetooth connection (e.g. a Bluetooth Low Energy connection), a ZigBee connection, a WiFi connection (e.g. a WiFi Direct connection), a 2G connection, a 3G connection, a 4G connection, a 5G connection, an LTE connection, and NFC connection, and RFID connection, an optical data connection, and audio data connection, or other wireless data connection. More generally, it will be appreciated that any wireless protocol can in principle be used for the wireless data connection.

The communication circuitry may also or alternatively comprise a wired communication module configured to establish a wired data connection with one or more further devices, and/or communicate data with one or more further devices using a wired data connection. For example, the wired communication module may comprise a wired interface such as a USB interface (e.g. a USB-A interface, a USB-B interface, a mini-USB interface, a micro-USB interface, a USB-C interface, or a USB-3 interface), a Thunderbolt interface, or other wired data interface. As a result, the wired data connection may correspondingly be a USB connection (e.g. a USB-A connection, a USB-B connection, a mini-USB connection, a micro-USB connection, USB-C connection, or a USB-3 connection), a Thunderbolt connection, or other wired data connection. More generally, it will be appreciated the wired module may comprise any wired interface using a wired protocol which enables the transfer of data, according to, for example, a packet data transfer protocol, and may comprise pin or contact pad arrangements configured to engage cooperating pins or contact pads on a further device which can be connected to the aerosol provision system (e.g. aerosol provision device thereof).

The controller may be configured to control operation of the aerosol provision system in dependence of input data received from the control interface. This input data may comprise input data provided from the one or more input components of the user interface, input data provided from the one or more sensors comprising sensor data, and input data provided from the communication circuitry corresponding to data received from a further device. In dependence of an event (e.g. responsive to the event) such as the receipt of input data, the controller may be configured to perform a control action, such as initiate functionality of a component of the aerosol provision system (e.g. cause the heating assembly to begin heating, cause the one or more output components to provide outputs to a user, or cause the communication circuitry to provide outputs to further device), change the parameters associated with functionality of a component of the aerosol provision system, enable or disable functionality of a component of the aerosol provision system.

The controller may be configured to perform a control action in dependence of an event, in which case the controller will determine whether and how to perform the control action depending on the occurrence or not of the event, and e.g. depending on the properties of the event. For example, the controller may cause a heating assembly to heat aerosol generating material in dependence of a detected property of a consumable, such that a particular heating profile is used for a particular detected property of a consumable when heating is initiated by the controller, and for another particular detected property of a consumable no heating is used. However, while this control action may be performed directly after the event, i.e. as triggered by the event, this need not be the case, and the control action may be performed at a later time. The controller may be configured to perform a control action responsive to an event, in which case the controller will then perform the action (directly after or at a later time), i.e. the performance of the action is triggered by the event. For example, the controller may cause a heating assembly to heat aerosol generating material responsive to a puff sensor detecting a user inhalation, directly after the inhalation is detected.

The controller may also be configured to control operation of the aerosol provision system (e.g. the aerosol provision device thereof) according to a selected mode (or plural selected modes). Each mode is associated with predetermined rules regarding the functionality of one or more components of the aerosol provision system (e.g. the aerosol provision device thereof). For example, operating parameters and/or logic may vary between modes. These components can include, but are not limited to, the memory, the control interface, the aerosol generator, and the power source. In some modes, particular functionality of one or more components may be enabled, such that the controller can cause the functionality to be performed by the aerosol provision system (e.g. the aerosol provision device thereof) when input data comprising an instruction to perform the functionality is received, e.g. by the controller. However, in some modes, particular functionality of one or more components may be disabled, such the controller does not cause the functionality to be performed by the aerosol provision system (e.g. the aerosol provision device thereof) when input data comprising an instruction to perform the functionality is received, e.g. by the controller.

The consumable itself may comprise either or both of a controller and memory. The controller and memory of the consumable may use any of the discussed above in regard to the aerosol provision system. The consumable may also likewise comprise a control interface for receiving inputs and/or providing outputs, which may use any of the features of the control interface discussed above in regard to the aerosol provision system. For instance, the control interface may comprise communication circuitry configured to connect to one or more further devices, and enable a data connection to be established with one or more further devices. In this context, a further device to the consumable may be the aerosol provision device, another consumable, or (as described further herein) an external power source device, or a computing device.

The aerosol provision device may comprise a charging interface for receiving power from an external power source. For example, the charging interface may be for receiving power from an external power source comprising a charging cable. Also provided as part of a system comprising the aerosol provision system may be an external power source device configured to connect to the aerosol provision device, for example the charging interface thereof, and supply power to the aerosol provision device. The external power source device may comprise an electrical power source, comprising a battery, such as a rechargeable battery. Examples of suitable batteries include, for example, a lithium battery (such as a lithium-ion battery), a nickel battery (such as a nickel-cadmium battery), and an alkaline battery. The external power source device may be configured to provide power to charge the electrical power source of the aerosol provision device. The external power source device may be a "charging case", comprising a recess configured to receive at least part of the aerosol provision device, wherein the external power source device is configured to connect to the charging interface when the aerosol provision device is received in the recess.

The external power source device may comprise either or both of a controller and memory. The controller and memory of the external power source device may use any of the features discussed with regard to the controller and memory discussed above in regard to the aerosol provision system. The controller of the external power source device may be configured to control the supply of power to the aerosol provision device. The external power source device may also likewise comprise a control interface for receiving inputs and/or providing outputs, which may use any of the features of the control interface discussed above in regard to the aerosol provision system. For instance, the control interface may comprise communication circuitry configured to connect to one or more further devices, and enable a data connection to be established with one or more further devices. In this context, a further device to the external power source device may be the aerosol provision device, the consumable, another external power source device, or (as described further herein) a computing device.

The charging interface of the external power source device may also be configured to communicate data with the external power source, when connected. In such arrangements, the charging interface corresponds to a wired communication component (i.e. of the communication circuitry of the external power source device) configured to communicate data using a wired data connection. The charging interface may comprise a wired interface such as a USB interface (e.g. a USB-A interface, USB-B interface, mini-USB interface, micro-USB interface, USB-C interface, or USB-3 interface), Thunderbolt interface, or other wired interface.

A system comprising the aerosol provision system may also comprise one or more computing devices, configured to connect to the aerosol provision system (e.g. the aerosol provision device thereof), and communicate with the aerosol provision system (e.g. the aerosol provision device thereof) using a data connection (e.g. wired or wireless). The one or more computing devices may comprise a local computing device which may be controlled or owned by the user, which may comprise a smartphone, a tablet, a personal computer (PC), a wearable device (e.g. a smart watch), a refilling device for refilling an aerosol provision device or consumable with aerosol generating material, or a connectivity hub. Additionally or alternatively, the one or more computing devices may comprise a remote computing device, which may be not controlled or owned by the user, such as a server.

The computing device may comprise either or both of a controller and memory. The controller and memory of the computing device may use any of the features discussed with regard to the controller and memory discussed above in regard to the aerosol provision system. The computing device may also likewise comprise a control interface for receiving inputs (e.g. from a user) and/or providing outputs (e.g. to a user), which may use any of the features of the control interface discussed above in regard to the aerosol provision system. The control interface may comprise communication circuitry configured to connect to a further device, and communicate data with a further device. In this context, a further device to the computing device may be the aerosol provision device, the consumable, the external power source device, or another computing device.

The aerosol provision system (e.g. the aerosol provision device thereof) may establish communication with a remote computing device directly, using one of the wireless protocols described above, for example by connecting with a communication node (such as a telecommunications "base station") which provides connectivity with the remote computing device. Alternatively or in addition, the aerosol provision system (e.g. the aerosol provision device thereof) may establish communication with the remote computing device via a local computing device, for example using a wired or wireless communication protocol to communicate with a local computing device, which then communicates with the remote communication device. The local computing devices may also communicate indirectly with the remote computing device via a relay device (which may be a further computing device), either to fulfil an aspect of their own functionality, or on behalf of the aerosol provision system (for example as a relay or co-processing unit).

The computing devices may also send data to each other, either directly or indirectly via any of the wired or wireless communication protocols set out above. Thus, in embodiments, a given first device and second device (e.g. any of the aerosol provision device, consumable, external power source device, and computing devices) may generally be in either a connected or unconnected state with respect to each other. The unconnected state may also be referred to as an idle state, and in such a state a given first device may not be detectable by other second devices (i.e. the first device is not transmitting any signalling enabling its existence and/or identity to be determined), or it may be available for establishing a data connection with a second device (i.e. it may be advertising its existence and/or identity using advertisement signalling). In a connected state, the first and second devices are configured such that data may be transferred from the first to the second device (e.g. 'uplink' transmission) and/or transferred from the second to the first device (e.g. 'downlink' transmission). Accordingly, establishment of a data connection between a first and second device may be considered to comprise the establishment of any state wherein the two devices can exchange data, regardless of the direction of data transfer. Non-limiting examples of connected states are the establishment of an RRC connected state according to the Long Term Evolution (LTE) standard, or a connected state according to the Bluetooth (e.g. Bluetooth Low Energy (BLE)) standard.

When a first and second device are configured to communicate wirelessly, a transition from an unconnected to a connected state will generally follow a procedure such as the following. In an initial enquiry step, a first device (for example, an aerosol provision device or consumable, although this may be applied to any aforementioned device) establishes the existence of a second device (for example, a computing device, although this may be applied to any aforementioned device) by receiving a beacon signal or other identifying signal from the second device. In an authentication step, the first and second devices exchange messaging to establish information relating to the data transfer protocol to be used for exchanging data (for example comprising coding and encryption parameters to be used when exchanging data). In a data transfer step, the first and second devices transfer data over a wireless interface established in accordance with an agreed data transfer protocol. This data transmission may be bi- or uni-directional. The data communication process for wired communications may be broadly similar with the difference that data is sent over a wired interface as opposed to a wireless interface.

A system comprising any aerosol provision system and any combination of an external power source device and computing devices, as described further herein, may be used to support functions of the aerosol provision system. These functions may be referred to as "connected" functions, in that they relate to the transmission of data between the aerosol provision system and other connected devices (e.g. one or more computing devices). Such an arrangement may be considered advantageous for enhancing aspects of the operation of an aerosol provision system. For example, an aerosol provision device enabled to receive data from further devices may be able to receive software updates (e.g. via software update files) or updated parameters (e.g. relating to the generating of aerosol by an aerosol generator) from a computing device. Determination of suitable parameters may entail significant processing overheats which are more efficiently carried out on computing devices, having higher processing capability than is typically provided on an aerosol provision system, where low energy consumption (for extended battery life) and reduced complexity (for cost reduction) are generally considered advantageous.

A computing device (such as a smartphone) may also be used by a user to provide inputs to the control interface of the aerosol provision system, which may be particularly advantageous where motivations exist to keep input components or output components on an aerosol provision system to a minimum, for example to reduce complexity and cost. Thus an application ("app") running on a computing device may support what are in effect offloaded or relayed functions for an aerosol provision device which has a direct or indirect (e.g. relayed) data connection with the computing device according to the approaches described above. Hence, the aerosol provision system may, via its communication circuitry, send data to a computing device (e.g. data based on sensor data received by the controller of the aerosol provision system, relating to the usage of the aerosol provision system), and the computing device may provide information relating to the aerosol provision system to the user via the app. Alternatively, or in addition, the user may select a control action via the app, and data relating to the control action may be sent by the computing device to the aerosol provision system, whereupon the controller of the aerosol provision system performs the control action.

Herein will be described various methods of operating an aerosol provision system. While these methods may be described in the context of control of an aerosol provision system by a controller of the aerosol provision system (e.g. the aerosol provision device thereof), it is recognised that these methods may be performed by any of the controllers of a broader system comprising any combination of one or more aerosol provision devices, one or more of consumables, one or more external power source devices, and one or more computing devices, or by any of these controllers in combination. In particular, as each of these controllers may be able to communicate with some or any of the other controllers in a system comprising any of an aerosol provision device, a consumable, an external power source, and a computing device, data such as instructions to perform one or more control actions may be communicated between any of these, either directly or indirectly. As such, a method of operating an aerosol provision system may be performed by a "distributed" aerosol provision system comprising any combination of the aerosol provision device, the consumable, the external power source device, and the computing device discussed above, for example performed by any one or more controllers of these. Accordingly, even though particular method steps may be described in the context of the controller of a particular device, it is anticipated that such control actions may be, where feasible, in alternative arrangements be performed by another of these controllers, and that various method steps may be performed by various corresponding different controllers.

Various embodiments will now be described in more detail.

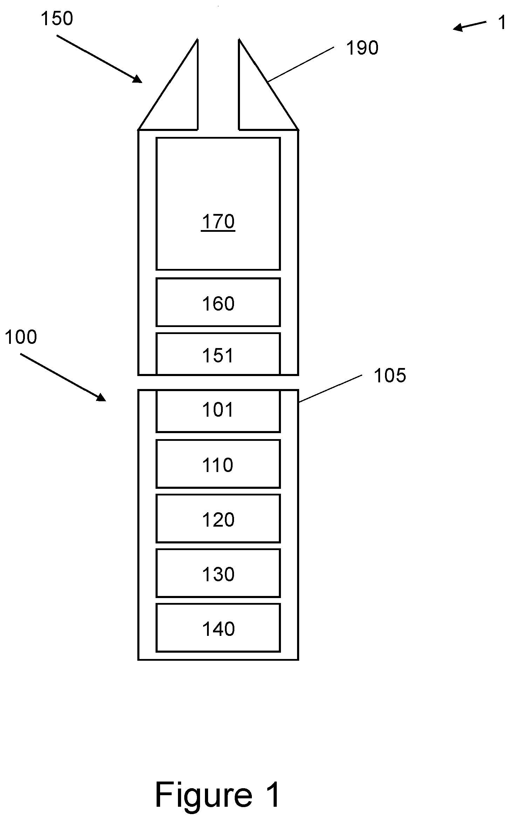

Figure 1 shows a cross-sectional view through a schematic representation of a two-piece aerosol provision system 1 in accordance with certain embodiments.

The aerosol provision system 1 is a two-piece aerosol provision system, comprising an aerosol provision device 100 and a consumable 150 comprising aerosol generating material 170. The aerosol provision device 100 comprises an outer housing 105, a memory 110, a controller 120 configured to control operation of the aerosol provision system 1, a control interface 130 for receiving inputs to the aerosol provision device and providing outputs from the aerosol provision device 100, and a power source 140 configured to supply electrical power for operation of the aerosol provision device 100. The outer housing 160 may also enclose at least partly the other components of the aerosol provision device 100, namely the memory 110, controller 120, the control interface 130, and the power source 140. The aerosol provision device 100 is a handheld electronic vapour device, meaning that the outer housing 160 enclosing the other components is dimensioned and configured to be held in the hand of a user. In other words, the device is portable.

The consumable 150 comprises a reservoir containing liquid aerosol generating material 170, and a mouthpiece 190 through which the user can draw aerosol that has been generated from the aerosol generating material 180. The consumable also comprises a heating assembly 160 configured to heat the aerosol generating material 170. In use, an engagement interface 101 of the aerosol provision device 100 is engaged with an engagement interface 151 of the consumable, each of these engagement interfaces comprising mechanical engagement means for mechanically coupling to one another. Each engagement interface 101, 151 also comprises an electrical engagement interface, such that the aerosol provision device 100 can be electrically connected with the consumable 150. The electrical engagement interface 101 of the aerosol provision device is configured to supply electrical power, from the power source 140, to the consumable, in particular to the heating assembly 160 of the consumable. The controller 120 is configured to control the supply of electrical power from the power source 140 to the heating assembly 160, so as to control the heating of the aerosol generating material 170 by the heating assembly 160.

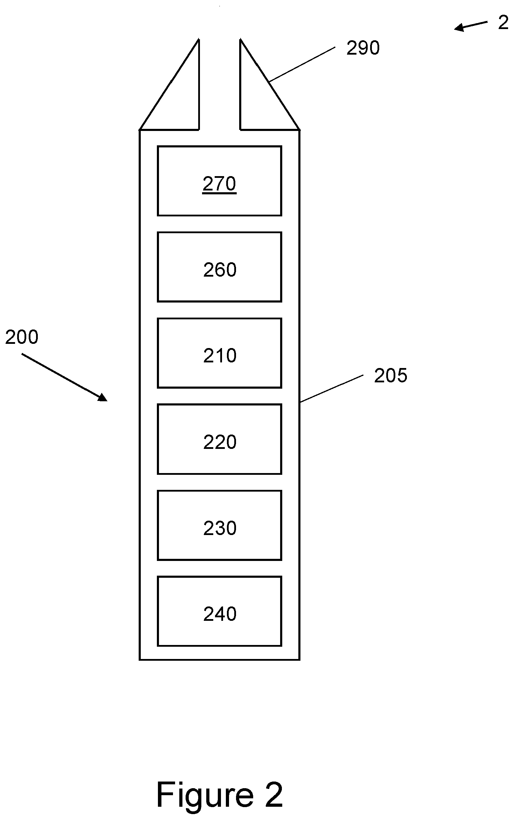

Figure 2 shows a cross-sectional view through a schematic representation of a one-piece aerosol provision system 2 in accordance with certain embodiments.

The aerosol provision system 2 is a one-piece aerosol provision device 200. The aerosol provision device 200 comprises an outer housing 205, a memory 210, a controller 220 configured to control operation of the aerosol provision device 200, a control interface 230 for receiving inputs to the aerosol provision device and providing outputs from the aerosol provision device 200, a power source 240 configured to supply electrical power for operation of the aerosol provision device 200, a reservoir containing liquid aerosol generating material 270, and a heating assembly 260 configured to heat the aerosol generating material 270. The outer housing 205 may also enclose at least partly the other components of the aerosol provision device 200, namely the memory 210, the controller 220, the control interface 230, the power source 240, the reservoir containing liquid aerosol generating material 270, and the heating assembly 260. The aerosol provision device 200 also comprises a mouthpiece 290 through which the user can draw aerosol that has been generated from the aerosol generating material 270.

The aerosol provision device 200 is a handheld electronic vapour device, meaning that the outer housing 205 enclosing the other components is dimensioned and configured to be held in the hand of a user. In other words, the device is portable. The aerosol provision device 200 is a disposable one-piece aerosol provision device, which the user can dispose of once the aerosol generating material 180 has been exhausted, and which is not configured to receive a consumable, and is not configured to be refillable by the user.

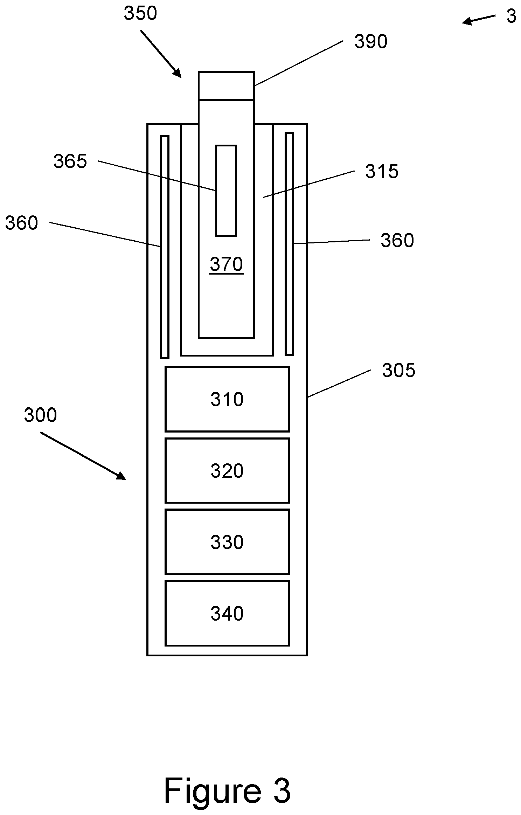

Figure 3 shows a cross sectional view through a schematic representation of a two-piece aerosol provision system 3 in accordance with certain embodiments.

The aerosol provision system 3 is a two-piece aerosol provision system, comprising an aerosol provision device 300 and a consumable 350 comprising aerosol generating material 370. The aerosol provision device 300 comprises an outer housing 305, a memory 310, a controller 320 configured to control operation of the aerosol provision system 3, a control interface 330 for receiving inputs to the aerosol provision device and providing outputs from the aerosol provision device 300, a heating assembly comprising a magnetic field generator 360 configured to generate a varying magnetic field, and a power source 340 configured to supply electrical power for operation of the aerosol provision device 300. The outer housing 305 may also enclose at least partly the other components of the aerosol provision device 300, namely the controller 320, the control interface 330, the magnetic field generator 360, and the power source 340. The aerosol provision device 300 is a handheld electronic vapour device, meaning that the outer housing 305 enclosing the other components is dimensioned and configured to be held in the hand of a user. In other words, the device is portable.

The consumable 350 comprises aerosol generating material 370 which is in the form of a solid or gel. The consumable 350 is in a rod format, and is received by a heating chamber 315 of the aerosol provision device 300. The magnetic field generator 360 is configured cause the heating chamber 315 to become heated, and the aerosol generating material 370 of the consumable 350 within the heating chamber 315. To do this, the heating assembly comprises a heating element 365 in the consumable, having susceptor material which is susceptible to heating by penetration with a varying magnetic field generated by the magnetic field generator 360. The magnetic field generator 360 is configured to generate this varying magnetic field, which penetrates the heating chamber 315, and the heating element 365 of the consumable 350, causing it to become heated, and in turn heat the aerosol generating material 370.

In this arrangement, the consumable comprises a mouthpiece 390, through which the user can draw aerosol that has been generated from the aerosol generating material 370. The aerosol provision device 300 and consumable 350 do not require respective engagement interfaces configured to enable the aerosol provision device 300 and consumable 350 to be electrically connected to one another, as an electrical connection therebetween is not used to heat the aerosol generating material 370.

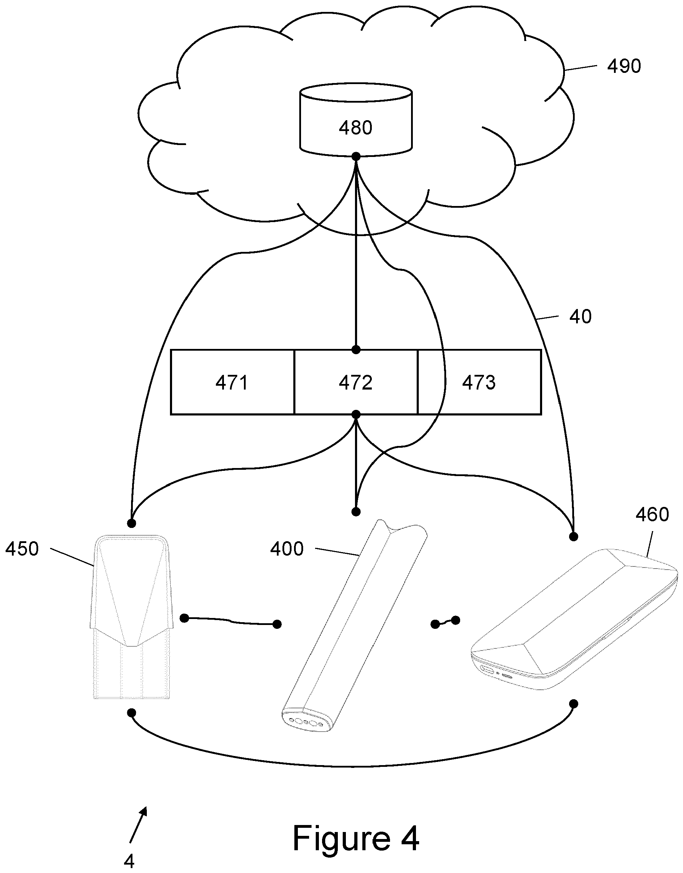

Figure 4 shows a schematic representation of system, comprising an aerosol provision system 4 comprising an aerosol provision device 400 and a consumable 450, an external power source device 460, local computing devices 471, 472, 473, and a remote computing device 480. The aerosol provision device 400 and consumable 450 may have any of the properties of the aerosol provision devices 100, 200, 300, and consumables 150, 350 discussed above.

In this arrangement, the remote computing device 480 is a server, which exists on the cloud 490. The aerosol provision system 4 may correspond to any of the aerosol provision systems 1, 2, or 3 discussed above, or any other aerosol provision system. Each of the local computing devices 471, 472, 471 are connected to each other, as well as being connected to each further device. Various data connections 40 between each of these devices is depicted, illustrating how data may be sent between any given first and second device.

In use, when these data connections 40 are established (either using wired or wireless protocols), data can be sent from a first device, such as the aerosol provision device 400, to a second device, such as the remote computing device 480, either directly via the direct data connection between these two devices (if it exists), or indirectly, relayed by another device or multiple other devices.

In the case of the aerosol provision device 400 and the remote computing device 480, data such as usage data collected by the aerosol provision device can be sent to the remote computing device 480 by sending the data to the external power source device 460 through a wired data connection. Then, the external power source device sends the data to first local computing device 471, which is a smartphone 471, through a wireless data connection. The wireless data connection between the smartphone 471 and the external power source device 460 is a Bluetooth connection, established using a Bluetooth module of the smartphone 471 and a Bluetooth module of the external power source device 460.

The smartphone 471 then sends the data to the remote computing device 480 through a wireless data connection. The wireless data connection between the smartphone 471 and the remote computing device 480 is a 3G wireless connection, established using a 3G module of the local computing device, connected with a corresponding communication node (such as a telecommunications "base station") which provides connectivity with the remote computing device 480.

A user may also use this network of data connections 40 to cause control actions to be performed on the aerosol provision device 400 by the controller thereof. Using an app on second local computing device 472 such as a smartphone or a personal computer, the user can select a control action, and the personal computer 472 then sends data relating to the control action to the remote computing device 480 through a wired data connection. The remote computing device 480 then sends data relating to the control action to the smartphone 471, using the 3G wireless connection discussed above.

The smartphone 471 then sends data relating to the control action to the external power source device 460 using the Bluetooth connection discussed above, and the external power source device 460 then sends data relating to the control action to the aerosol provision device 400 through the wired data connection between the aerosol provision device 400 and the external power source device 460. The data relating to the control action is received by the controller of the aerosol provision device 400, and the controller causes the aerosol provision device 400 to perform the control action.

For an aerosol provision device, such as aerosol provision devices 100, 200, 300, 400, it is desirable to ensure that the software, e.g. firmware, of the aerosol provision device can be reliably updated. This is because new security patches or new features that enhance the use of the aerosol provision device may be developed after the manufacture of the aerosol provision device. Updates to the aerosol provision devices may also be required in response to changes in the legislation of a given jurisdiction/region.

However, different types of aerosol provision devices having different software versions may be used with different aerosol generating materials in different jurisdictions/region. Each aerosol provision device may therefore have different update requirements and respond differently to the same software file, increasing the complexity of updating a plurality of aerosol provision devices.

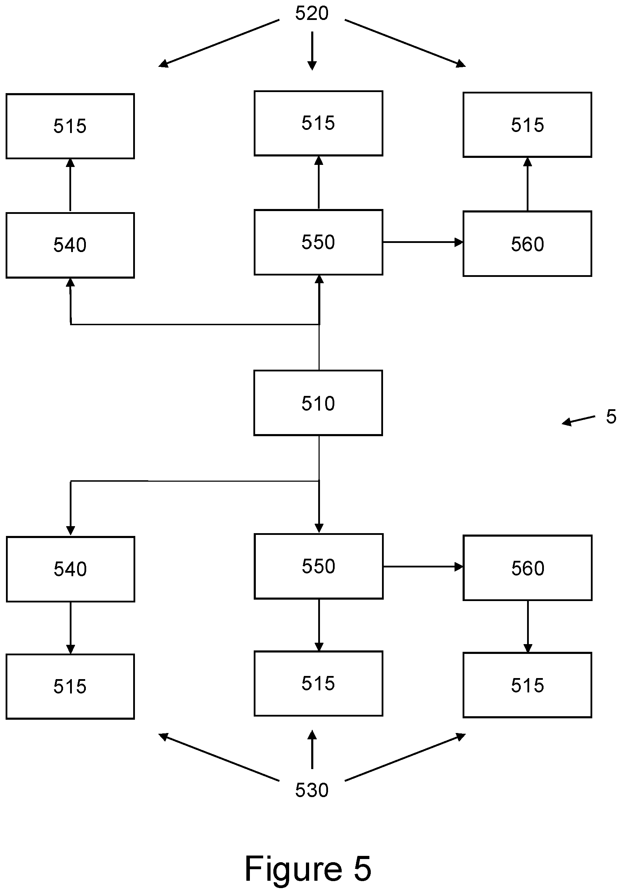

The present application seeks to provide a system which may be improved in this regard. Figure 5 shows a system 5. The system 5 comprises an authorised computing system 510 and a plurality of aerosol provision devices 515. The authorised computing system 510 is a remote computing system (e.g. a remote computing device such as the remote computing device 480). The authorised computing system 510 additionally has the authority, i.e. the necessary rights and capabilities, to send software update files to and receive data from the plurality of aerosol provision devices 515. The authorised computing system 510 may, for example, be a server operated by the manufacturer of the plurality of aerosol provision devices 515.

The plurality of aerosol provision devices 515 comprises a first subset of aerosol provision devices 520 and a second subset of aerosol provision devices 530. The plurality of aerosol provision devices 515 may comprise any number of additional subsets of aerosol provision devices, such as a third subset, a fourth subset, a fifth subset etc.

The authorised computing system 510 may be able to establish communication with the plurality of aerosol provision devices 515 directly, e.g. using wireless communication and connecting via a communication note such as a base station 540. The authorised computing system 510 may be able to establish communication with the plurality of aerosol provision devices 515 indirectly via a local computing device 550 that is connected to the aerosol provision devices using wireless or wired communication or through a further device 560, e.g. an external power source, that is connectable to the aerosol provision devices.

The system may comprise more than one authorised computing system. The system may for example comprise a first authorised computing system for update provision and a second authorised computing system for data collection.

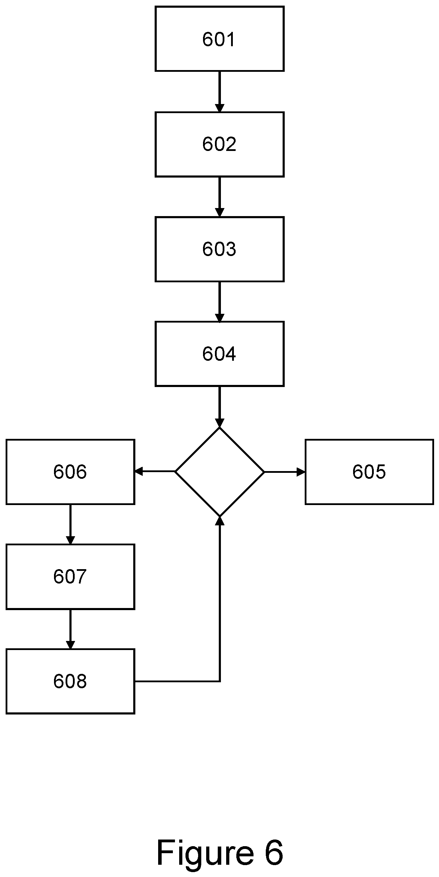

Figure 6 shows a schematic representation of a method of updating the functionality of the plurality of aerosol provision devices 515. The method comprises a first step 601 of selecting the first subset of aerosol provision devices 520. Optionally, the first step 601 may comprise or be concurrent with a step of selecting the second subset of aerosol provision devices 530 or any number of further subsets of aerosol provision devices.

The authorised computing system 510 is configured to select the aerosol provision devices that form the first subset of aerosol provision devices 520 from the plurality of aerosol provision devices 515. The second subset of aerosol provision devices 530 may be the remaining aerosol provision devices, i.e. the aerosol provision devices from the plurality of aerosol provision devices 515 not selected as part of the first subset of aerosol provision devices 520. Alternatively, the authorised computing system 510 may be configured to select the aerosol provision devices that form the second subset of aerosol provision devices 530. The authorised computing system 510 may be configured to select any number of additional subsets of aerosol provision devices from the plurality of aerosol provision devices 515.

The selection of aerosol provision devices may be carried out using suitable criteria such as any one of: the type of aerosol provision device; the geographical region in which the aerosol provision device was manufactured, sold or last used; the version of the software installed in the aerosol provision device; and user properties. Alternatively or additionally, the aerosol provision devices may be selected at random. The selection of aerosol provision devices may be narrowed down by combining criteria, e.g. the first subset of aerosol provision devices 520 may be selected to comprise devices in a particular region that have a particular software installed.

When using the type of aerosol provision device as a selection criterion, the first subset of aerosol provision devices 520 may be aerosol provision devices of a first type, and the second subset of aerosol provision devices 530 may be aerosol provision devices of a second type.

The aerosol provision devices of the first type may be of a different model than those of the second type. Alternatively or additionally, the aerosol provision devices of the first type may be for generating aerosol from a first type of aerosol generating material, and the aerosol provision devices of the second type may be for generating aerosol from a second type of aerosol generating material. For example, the first type of aerosol generating material may be a solid material and the second type of aerosol generating material may be a liquid material. Further alternatively or additionally, the aerosol provision devices of the first type may be configured to use a first mechanism to generate aerosol, and the aerosol provision devices of the second type may be configured to use a second mechanism to generate aerosol. For example, the first mechanism may be a resistive heating element and the second mechanism may be an inductive heating element.

When using the geographical region as a selection criterion the first subset of aerosol provision devices 520 may be aerosol provision devices associated with a first region, and the second subset of aerosol provision devices 530 may be aerosol provision devices are associated with a second region. The first region may be different from the second region or the first region and second region may at least partially overlap. The geographical region associated with an aerosol provision device may be derived from the model aerosol provision device, a unique identifier of the aerosol provision device or location information from a communication node or local computing device used to communicate with the aerosol provision device, e.g. an IP address.

When using user properties as a selection criterion, the aerosol provision devices of the first subset of aerosol provision devices 520 may be associated with users having a first property, and the aerosol provision devices of the second subset of aerosol provision devices 530 may be associated with users having a second property. For example, the first property may be using a first type of consumable and the second property may be using a second type of consumable. Alternatively, the first property may be a first use pattern, e.g. regular use, and the second property may be a different use pattern, e.g. occasional use.

The first subset of the aerosol provision devices may more broadly account for any one of <70%, <50%, <30%, <20%, <10% and 5% of the plurality of aerosol provision devices 515. For example, the first subset of aerosol provision devices 520 may account for 5% of the plurality of aerosol provision devices 515, the second subset may account for 20% of the plurality of aerosol provision devices 515 and a third subset may account for the remaining 75% of the plurality of aerosol provision devices 515.

Alternatively, the first step 601 may be omitted. This may be done in cases where a selected first subset of aerosol provision devices 520 already exists, e.g. based on historical data or pre-selected data. The authorised computing system 510 may comprise an existing database of pre-selected subsets of aerosol provision devices.

The method comprises a second step 602 following the first step 601, the second step 602 comprising sending, by the authorised computing system 510, a first software update file comprising first software to each aerosol provision device of the first subset of aerosol provision devices 520. The first software may be a first firmware.

The second step 602 comprises establishing direct or indirect communication with the first subset of aerosol provision devices 520. The first software file will be received by the communication circuitry of each aerosol provision device and saved in its memory. If the memory has sufficient capacity, a dual bank update may be carried out and the first software file may be saved without replacing existing information saved in the memory. If the memory does not have sufficient capacity, i.e. below a threshold memory capacity, a single bank update may be carried out and the first software file may replace at least part of the existing information saved in the memory.

The first software update file comprises information for installing new software versions that can provide, for example, new features, update heating profiles, provide new heating profiles for new products or aerosol generating materials, fix problems and provide security patches. The first software update file is also capable of disabling existing features and may therefore be used for features such as youth access prevention and geofencing.

The first software update file may be tailored for the selected aerosol generating devices to which it is sent. For example, the first software update file may comprise a first software having new heating profiles relevant to the type or use of the selected aerosol generating devices.

Alternatively, the first software update file may not be tailored for the selected aerosol generating devices to which it is sent and the controller of each aerosol provision device may be configured to assess whether the first software of the first software update file is suitable for implementation. Alternatively, the assessment of the suitability or compatibility of the first software of the first software update file for an aerosol provision device may be carried out by a local computing device or a further device that is in communication with the aerosol provision device.

The first software update file may be sent as multiple separate file portions. However, the software update file may alternatively be sent as a full file. Each file or file portion may include header data and footer or trailer data. Input data for each file or file portion may be provided to the controller of each aerosol provision device. Each file or file portion may be encrypted and each aerosol provision device may be capable of decrypting them using a respective cryptographic key. Moreover, the first software update file may be part of a series of updates and be intended to be sent before a further software update file.

The method may further comprise receiving the first software update file by the aerosol provision devices of the first subset of aerosol provision devices 520. The aerosol provision devices may receive the first software update directly from the authorised computing system 510, e.g. via the base station 540 or they may receive the first software update file via a local computing device 550 or a further device 560. For example, in the case where a local computing device 550 is a smartphone a mobile application may (i) periodically, regularly or constantly check for new available updates; (ii) download the first software update file; and (iii) send it to a corresponding aerosol provision device. As mentioned above, the smartphone may be configured to assess whether the new available update is suitable for the corresponding aerosol provision device. The mobile application may be a native application or a progressive web application (PWA) and may be used in any operating system, e.g. Android or iOS.

The method comprises a third step 603 following the second step 602, the third step 603 comprising attempting to implement, by aerosol provision devices of the first subset of aerosol provision devices 520, the first software of the first software update file.

It will be understood that the implementation of the first software in each aerosol provision device will be implemented by its controller. If the first software update file is received by an aerosol provision device as multiple separate file portions the controller is configured to assemble together the file portions prior to implementation in the aerosol provision device. The controller may be configured to decrypt the first software update file using a first cryptographic key of the aerosol provision device prior to attempting to implement the first software.

In the case that the controller is configured to assess whether the first software is suitable for its corresponding aerosol provision device, the assessment of whether the first software is suitable may be based on whether the first software is compatible with the type of the aerosol provision device. The first software update file may comprise information on the compatible or intended aerosol provision devices or the intended region in which the devices are to be updated, e.g. by including the aerosol provision device name. The first software update file may additionally or alternatively comprise a unique identifier of each aerosol provision device by which the first software update file is intended to be implemented.

The assessment may also be based on whether the first software is more recent than the existing software of the aerosol provision device. The controller may assess whether the first software is more recent than its existing software by comparing a characteristic of the first software and the existing software such as the version number or the date of creation. The controller may therefore allow the implementation of the first software update file if the first softwawre update file is newer than the existing software and prevent the implementation of the first software update file if the version of the first software update file is older or the same as the existing software. In addition, the controller may prevent the implementation of the first software update file if the existing version is too old such that the implementation of intermediate software versions is required.

In the case of a dual bank update being carried out, the controller may delete the existing information relating to earlier software during the implementation of the first software.

The method comprises a fourth step 604 following the third step 603, the fourth step 604 comprising receiving, by the authorised computing system 510, data relating to the attempting to implement the first software of the software update file.

The same communication established for sending the first software update file can be used for receiving data relating to the attempting to implement the first software of the software update file. The aerosol provision devices from first subset of aerosol provision devices 520 are configured to, following implementation of the first software, send data relating to the attempting to implement the first software to the authorised computing system 510.

The data relating to the attempting to implement the first software may comprise data relating to one or more properties of the aerosol provision devices of the first subset of aerosol provision devices 520 prior to the attempting to implement the first software. As mentioned previously, such data may be based on sensor data received by controllers of the aerosol provision devices. The provision of this data can provide context to the attempting to implement the first software which can help to determine the reasons why attempts to implement the first software succeeded or failed.

The one or more properties of the aerosol provision devices may comprise one or more properties of which previous software of the aerosol provision devices of the first subset of aerosol provision devices 520 was implemented prior to the attempting to implement the first software. These properties may comprise the time of development of the previous software as indicated by the date of development of the previous software and/or the iteration of development of the previous software.

The data relating to the attempting to implement the first software may additionally or alternatively comprise use data relating to use of the aerosol provision devices of the first subset of aerosol provision devices 520.

The use data may comprise data relating to use of the aerosol provision devices of the first subset of aerosol provision devices 520 before the attempting to implement the first software. The provision of this data can provide context to the attempting to implement the first software which can help to determine the reasons why attempts to implement the first software succeeded or failed.

The use data may comprise data relating to use of the aerosol provision devices of the first subset of aerosol provision devices 520 after the attempting to implement the first software. This data may help better assess implementation of the first software because problems resulting from the first software may not be immediately obvious and may only become apparent until after a period of time after the implementation has elapsed.

The use data relating to use of the first subset of aerosol provision devices 520 after the attempting to implement the first software may comprise use data relating to use of the aerosol provision devices of the first subset of aerosol provision devices 520 for which the first software was implemented as a result of the attempting to implement the first software, i.e. the use data may exclude data relating to the use of aerosol provision devices for which the first software way not implemented.

The use data may comprise one or more entries of one or more types of use data such as a timestamp or data which indicate a property relating to a connected status of communication circuitry of the aerosol provision devices of the first subset of aerosol provision devices 520.

The one or more entries of one or more types of use data include one or more entries of a type of use data which indicate a property relating to a power source of the aerosol provision devices of the first subset of aerosol provision devices 520 such as:
i) a charge level of a power source of the aerosol provision devices of the first subset of aerosol provision devices 520; or
ii) a charging status of the power source of the aerosol provision devices of the first subset of aerosol provision devices 520.

The use data may relate to an internal power source or an external power source.

The one or more entries of one or more types of use data may include one or more entries of a type of use data which indicate a property relating to use with aerosol generating material of the aerosol provision devices of the first subset of aerosol provision devices 520 such as:
i) a type of aerosol generate material provided to the aerosol provision device;
ii) a type of consumable comprising aerosol generating material provided to the aerosol provision device;
iii) a heating profile according to which the controller causes a heating assembly of an aerosol generator to heat aerosol generating material;
iv) an occurrence of a session of generating aerosol from aerosol generating material by the aerosol provision device; or
v) an occurrence of an inhalation of aerosol generated from aerosol generating material by the aerosol provision device.

The provision of use data indicating the type of aerosol generate material and the type of consumables provided to the aerosol provision device can help assess the relationship of a software update file with different types of aerosol generating materials and consumables, e.g. assess whether there are any compatibility issues. The provision of use data indicating the heating profile can help assess whether a software update file was correctly implemented by comparing an implemented heating profile with an intended heating profile. Moreover, the heating profile may comprise performance data indicative of its effectiveness. In addition, the provision of use data indicating occurrences of a session of generating aerosol and of an inhalation can help assess the operation of the aerosol provision device, e.g. the recurrent occurrence of session of generating aerosol without the occurrence of an inhalation or vice versa might be indicative of a problem.

The data relating to the attempting to implement of the first software may comprise data indicating whether or not the first software was implemented by the aerosol devices of the first subset of aerosol provision devices 520 as a result of the attempting to implement the first software. The data relating to the attempting to implement of the first software may indicate that the first software was implemented by the aerosol devices of the first subset of aerosol provision devices 520 by the presence a positive indication, e.g. a success message, or by the absence of a negative indication, e.g. an error message. Conversely, the data relating to the attempting to implement of the first software may indicate that the first software was not implemented by the aerosol devices of the first subset of aerosol provision devices 520 by the presence of a negative indication, or by the absence of a positive indication.

Alternatively, the controller may assess the attempt to implement the first software by assessing the use data relating to use of the aerosol provision devices of the first subset of aerosol provision devices 520 after the attempting to implement the first software. For example, attempting to implement the first software might be considered to have succeeded if the aerosol provision device appears to function normally given its heating profile and charge levels. Attempting to implement the first software might be considered to have failed if communication with an aerosol provision device 515 stops for a period of time, e.g. 24h. Following that period of time, the authorised computing system 510 may receive data relating to the attempting to implement the first software from a local device 550 comprising an error message.

The method comprises a fifth step 605 following the fourth step 604, the fifth step 605 comprising, sending, by the authorised computing system 510, a second software update file including second software to the second subset of the aerosol provision devices, e.g. 20% of the plurality of aerosol provision devices 515. The fifth step 605 is taken depending on the data relating to the attempting to implement the first software of the first software update file., The fifth step may be taken depending on the rate of success of the attempting to implement the first software. Alternatively, the fifth step may be taken depending on the type of errors that occurred when attempting to implement the first software, e.g. the fifth step may be taken if only minor errors were reported as part of the data relating to the attempting to implement the first software.

It will be understood that, while not shown in Figure 6, the method may also comprise the step of attempting to implement the second software of the second software update file by the aerosol provision devices of the second subset of aerosol provision devices 530 in the same way as described in relation to the third step 603. Similarly, the method may also comprise the step of receiving by an authorised computing system, data relating to the attempting to implement the second software of the software update file in the same way as described in relation to the fourth step 604.

Following this approach allows for an update in functionality to be tested in the first subset of aerosol provision devices 520 before it is rolled out to the second subset of aerosol provision devices 530, therefore reducing potential for disruption to the overall plurality of aerosol provision devices 515. The second software may be a second firmware.

If the data relating to the attempting to implement the first software of the first software update file indicates that the first software was implemented as a result of the attempting to implement the first software on above a threshold portion of the aerosol provision devices of the first subset of aerosol provision devices 520, the second software may correspond to the first software. The threshold portion of the aerosol provision devices may be any one of >50%, >60%, >70% >80% and >90%.

The second software corresponding to the first software means that the second software is similar or substantially identical to the first software. However, the second software and the second software file update may comprise differences with respect to the first software and the second software file such as software version data indicating that the second software is intended for sending and implementing by the second subset of aerosol provision devices 530. Alternatively, the second software may comprise additional data relating to features of the second subset of aerosol provision devices 530 or lack data which specifically related to the first subset of aerosol provision devices 520.

The method comprises a sixth step 606 following the fourth step 604, the sixth step 606 comprising sending, by the authorised computing system 510, a modified first software update file comprising modified first software to each aerosol provision device of the first subset of aerosol provision devices 520. The sixth step may be carried out if the data relating to the attempting to implement the first software of the first software update file indicates that the first software was not implemented as a result of the attempting to implement the first software on above a threshold portion of the aerosol provision devices of the first subset of aerosol provision devices 520. The threshold portion of aerosol devices may be any one of >10%, >20%, >30%, >40% and >50%.

The method may further comprise the step of modifying the first software update file to create the modified first software update file. The method may further comprise the step of reviewing the data relating to the implementing of the first software when modifying the first software update file.

The method comprises a seventh step 607 following the sixth step 606, the seventh step 607 comprising attempting to implement, by aerosol provision devices of the first subset of aerosol provision devices 520, the modified first software of the first software update file. The attempting to implement the modified first software in the seventh step 607 is substantially the same as the attempting to implement the first software in the third step 603.

The method comprises an eighth step 608 following the seventh step 607, the eighth step 608 comprising receiving, by the authorised computing system 510, data relating to the attempting to implement the modified first software of the software update file. The receipt of data in the eighth step 608 is substantially the same as the receipt of data in the fourth step 604.

If the data relating to the attempting to implement the modified first software of the first software update file indicates that the modified first software was implemented as a result of the attempting to implement the modified first software on above a threshold portion of the aerosol provision devices of the first subset of aerosol provision devices 520, the fifth step 605 is then taken and the second software corresponds to the modified first software. The threshold portion of the aerosol provision devices may be any one of >50%, >60%, >70% >80% and >90%. Alternatively, the fifth step 605 may be taken and the second software may correspond to the modified first software regardless of whether it is implemented on a threshold portion of the aerosol provision devices.

The second software corresponding to the modified first software means that the second software is similar or substantially identical to the modified first software. However, the second software and the second software file update may comprise differences with respect to the modified first software and the second software file such as software version data indicating that the second software is intended for sending and implementation by the second subset of aerosol provision devices 530. Alternatively, the second software may comprise additional data relating to features of the second subset of aerosol provision devices 530 or lack data which specifically relates to the first subset of aerosol provision devices 520.

The above steps may be repeated for further subsets of aerosol provision devices, e.g. a third subset of aerosol provision devices, a fourth subset of aerosol provision devices etc.

The sending and attempting to implement the second software or each subsequent software update, i.e. software of a software update file, may be delayed by a period of time after attempting to implement the previous software update. The period of time between each attempt to implement a software update may be regular or it may be different over time, e.g. the period may vary depending on the previous result of the attempting to implement the previous software. The period of time may be any one of >1 minute, >1 hour, >1 day and >1 week. For example, a percentage of aerosol provision devices may be updated week by week.
The sixth step 606, the seventh step 607 and the eight step 608 may be repeated in an iterative process if the modified first software is not implemented above a threshold portion of the aerosol provision devices of the first subset of aerosol provision devices 520, i.e. further modified software may be created.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims or limitations on equivalents to the claims, and that other embodiments may be utilised and modifications may be made without departing from the scope of the claimed invention. Various embodiments of the invention may suitably comprise, consist of, or consist essentially of, appropriate combinations of the disclosed elements, components, features, parts, steps, means, etc, other than those specifically described herein. In addition, this disclosure may include other inventions not presently claimed, but which may be claimed in future.

## Claims

1. A method of updating functionality of a plurality of aerosol provision devices, the plurality of aerosol provision devices comprising a first subset of aerosol provision devices and a second subset of aerosol provision devices, comprising:
sending, by an authorised computing system, a first software update file comprising first software to each aerosol provision device of the first subset of aerosol provision devices;
attempting to implement, by aerosol provision devices of the first subset of aerosol provision devices, the first software of the first software update file;
receiving, by the authorised computing system, data relating to the attempting to implement the first software of the first software update file; and
in dependence of the data relating to the attempting to implement the first software of the first software update file, sending, by the authorised computing system, a second software update file including second software to the second subset of the aerosol provision devices.

2. The method of claim 1, wherein the data relating to the attempting to implement the first software is sent to the authorised computing system, from the first subset of aerosol provision devices.

3. The method of any preceding claim, wherein the data relating to the attempting to implement of the first software comprises data indicating whether or not the first software was implemented by aerosol provision devices of the first subset of aerosol provision devices as a result of the attempting to implement the first software.

4. The method of any preceding claim, wherein the data relating to the attempting to implement of the first software comprises data relating to one or more properties of the aerosol provision devices of the first subset of aerosol provision devices prior to the attempting to implement the first software.

5. The method of claim 4, wherein the one or more properties comprise one or more properties of previous software of the aerosol provision devices of the first subset of aerosol provision devices, wherein the previous software was implemented by the aerosol provision devices of the first subset prior to the attempting to implement the first software.

6. The method of any preceding claim, wherein the data relating to the attempting to implement the first software comprises use data relating to use of the aerosol provision devices of the first subset of aerosol provision devices, optionally wherein the use data comprises use data relating to use of the aerosol provision devices of the first subset of aerosol provision devices after the attempting to implement the first software.

7. The method of any of claim 6, wherein the use data comprises one or more entries of one or more types of use data,
wherein the one or more entries of one or more types of use data include one or more entries of a type of use data which indicate at least one of:
a property relating to a power source of the aerosol provision devices of the first subset of aerosol provision devices; and
a property relating to a connected status of communication circuitry of the aerosol provision devices of the first subset of aerosol provision devices.

8. The method of any preceding claim, wherein, if the data relating to the attempting to implement the first software of the first software update file indicates that the first software was implemented as a result of the attempting to implement the first software on above a threshold portion of the aerosol provision devices of the first subset of aerosol provision devices, the second software corresponds to the first software.

9. The method of any preceding claim, wherein, if the data relating to the attempting to implement the first software of the first software update file indicates that the first software was not implemented as a result of the attempting to implement the first software on above a threshold portion of the aerosol provision devices of the first subset of aerosol provision devices, the method comprises:
sending, by an authorised computing system, a modified first software update file comprising modified first software to each aerosol provision device of the first subset of aerosol provision devices;
attempting to implement, by aerosol provision devices of the first subset of aerosol provision devices, the modified first software of the first software update file;
receiving, by the authorised computing system, data relating to the attempting to implement the modified first software of the software update file.

10. The method of any preceding claim, comprising:
selecting, by the authorised computing system, the aerosol provision devices of the first subset of aerosol provision devices from the plurality of aerosol provision devices.

11. The method of any preceding claim, wherein the first subset of aerosol provision devices are aerosol provision devices of a first type, and the second subset of aerosol provision devices are aerosol provision devices of a second type.

12. The method of any preceding claim, wherein the first subset of aerosol provision devices are aerosol provision devices associated with a first region, and the second subset of aerosol provision devices are aerosol provision devices are associated with a second region.

13. The method of any preceding claim, wherein the aerosol provision devices of the first subset of aerosol provision devices are associated with users having a first property, and the aerosol provision devices of the second subset of aerosol provision devices are associated with users having a second property.

14. An authorised computing system for updating functionality of a plurality of aerosol provision devices, the plurality of aerosol provision devices comprising a first subset of aerosol provision devices and a second subset of aerosol provision devices, wherein the authorised computing system is configured to:
send a first software update file comprising first software to each aerosol provision device of the first subset of aerosol provision devices;
receive data relating to the attempting to implement the first software of the software update file by the first subset of aerosol provision devices; and
in dependence of the data relating to the attempting to implement the first software of the first software update file, send a second software update file including second software to the second subset of the aerosol provision devices.

15. A system, comprising:
the authorised computing system of claim 14; and
a plurality of aerosol provision devices, the plurality of aerosol provision devices comprising a first subset of aerosol provision devices and a second subset of aerosol provision devices.
